# EUROPÄISCHE PATENTSCHRIFT

(11) **EP 3 681 729 B1**
(45) Veröffentlichungstag und Bekanntmachung des Hinweises auf die Patenterteilung: **03.09.2025**
(21) Anmeldenummer: 18768864.3
(22) Anmeldetag: 10.09.2018
(51) Int. Cl.: B42D 25/305, B42D 25/485

(54) **VERFAHREN ZUM HERSTELLEN UND SCHÜTZEN GEGEN UNZULÄSSIGE VERVIELFÄLTIGUNG VON DEKORPAPIER ODER -FOLIEN**
METHOD FOR PRODUCING AND FOR PROTECTING AGAINST UNAUTHORIZED REPRODUCTION OF DECORATIVE PAPER OR FOIL
PROCÉDÉ DE FABRICATION ET DE PROTECTION CONTRE LA REPRODUCTION NON AUTORISÉE DU PAPIER OU FEUILLE DÉCORATIF

(30) Priorität: 14.09.2017 DE 102017121391; 29.11.2017 DE 102017128258
(43) Veröffentlichungstag der Anmeldung: 22.07.2020
(73) Patentinhaber: Schattdecor SE, 83101 Rohrdorf OT Thansau (DE)
(72) Erfinder: HEEGER, Roland, 83101 Thansau (DE)
(74) Vertreter: Prinz & Partner mbB
(86) Internationale Anmeldenummer: PCT/EP2018/074329
(87) Internationale Veröffentlichungsnummer: WO 2019/052953

(56) Entgegenhaltungen:
- WO-A1-2016/134171
- DE-A1- 102013 007 602
- DE-T2- 69 937 972
- US-A1- 2007 286 472
- US-A1- 2008 002 882
- US-A1- 2013 311 329

## Beschreibung

Die Erfindung betrifft ein Verfahren zum Herstellen von Dekorpapier oder Dekorfolie, die die Oberfläche eines Dekorteils bilden, und zu deren Schutz gegen unzulässige Vervielfältigung.

Für Möbeloberflächen, Wände, Fußböden und Raumdecken werden zunehmend qualitativ hochwertigste Dekore auf ein Dekorrohpapier oder eine Dekorrohfolie unter Schaffung des Dekorpapiers oder der Dekorfolie gedruckt und vollflächig auf einem Trägermaterial aufgebracht, zum Beispiel durch Laminieren. Solche Dekore sind beispielsweise Holznachbildungen, Steinreplikationen, fotorealistische Abbildungen, aber auch grafische Elemente, Textil- und Fantasiemuster. Gerade Nachbildungen von Naturstoffen wie Holz oder Stein qualitativ so hochwertig zu schaffen, dass der Betrachter Schwierigkeiten hat oder es dem Betrachter unmöglich ist, eine echte Naturoberfläche von einer gedruckten Dekoroberfläche zu unterscheiden, ist extrem aufwendig. Dementsprechend beliebt ist es bei Fälschern, mittels üblicher Scanner die im Markt erfolgreichen Originaldekore zu scannen und damit die digitale Bilddatei zu erlangen, welche für qualitativ hochwertige Fälschungen erforderlich sind.

Dekorrohpapiere sind hochtechnische Spezialpapiere, welche mit wässrigen oder lösungsmittelhaltigen Farbsystemen bedruckt werden oder unbedruckt, einfarbig weiterverarbeitet werden. Die Weiterverarbeitung gliedert sich im Wesentlichen in die Prozesse der Imprägnierung, der Lackierung bei Möbelanwendungen und vorimprägnierten Dekorrohpapieren, der Verpressung auf Holzwerkstoffe oder der Kaschierung auf Holzwerkstoffen oder anderen plattenförmigen Materialien. Ein Beispiel für die Herstellung eines solchen Dekorteils beschreibt die DE 10 2013 007 602 A1.

Holzwerkstoffe sind Spanplatten, Faserplatten, mitteldichte Faserplatten (MDF) und hochverdichtete Faserplatten. Gleichwohl können aber auch Platten beschichtet beziehungsweise laminiert werden, welche aus einer Vielzahl von Materialien wie insbesondere mineralische Materialien, Kunststoffe oder Metalle hergestellt sein können.

Eine weitere Weiterverarbeitung dieser Papiere ist die Herstellung von dekorativen Schichtstoffplatten, welche aus imprägnierten, bedruckten und/oder durchgefärbten Beschichtungsrohpapieren und Kernpapieren zu einer homogenen Platte verpresst oder in einem endlosen Prozess (vgl. CPL) hergestellt werden.

Es sind verschiedene Möglichkeiten in Erwägung gezogen worden oder genutzt worden, um Fälschungen von Dekorteilen oder der Dekorpapiere und Dekorfolien zu identifizieren oder Fälschungen zumindest zu erschweren.

Eine dieser Möglichkeiten besteht darin, ähnlich wie bei Geldscheinen, für das menschliche Auge nicht sichtbare Muster, sogenannte Moiré-Muster einzubetten, die dann von einem Scanner nicht erfasst werden, sondern zu einer Verfälschung der Bereiche führen, sodass diese Bereiche schwarz wiedergegeben werden. Eine Methode zur Vermeidung von Fälschungen in der Vergangenheit bestand demnach darin, in das Dekor solche Muster einzubauen, die dann in der Bilddatei als schwarze Flecken wiedergegeben sind und bei einem entsprechenden Ausdruck als schwarze Flecken auftreten. Jedoch ist es für einen geübten Kopierer durchaus möglich, diese schwarzen Flecken mit anderen kopierten Abschnitten des Gesamtdekors wieder abzudecken, unter Umständen unter Anpassung der Übergangsränder. Dieses Verfahren ist folglich nicht nur sehr teuer, sondern bietet keinen optimalen Schutz. Im Übrigen werden solche Schutzmaßnahmen mit der zunehmenden Detailtreue von Scannern zunehmend unwirksam.

Eine weitere Möglichkeit, die in der Vergangenheit verwendet wurde, besteht darin, versteckte Zeichen in das Dekor digital einzubetten, die mitgedruckt werden, aber mit dem menschlichen Auge nicht erfasst werden können. Wird das Dekor dann abgescannt, übersetzt eine Software die versteckten Bildpunkte und vergleicht sie mit hinterlegten Bildpunkten. Falls eine Übereinstimmung gegeben ist, wird das Dekor als Original bezeichnet. Dieses Verfahren lebt davon, dass beim Scannen und Drucken die versteckten Informationen nicht auf der Kopie wiedergegeben werden können. Anders als die zuvor erwähnten schwarzen Flecken ist das unzulässig kopierte Dekor für den Betrachter unverändert geblieben und dem Original ähnlich oder fast identisch zum Original. Auch dieses Verfahren lebt jedoch davon, dass dieser Kopierschutz nicht durch leistungsfähigere Scanner und Drucker in Zukunft unterlaufen wird. Somit ist es ein permanentes Erstellen von neuen Maßnahmen zum Kopierschutz, die insbesondere darauf fußen, dass die Pixelanzahl pro Quadratinch zunimmt und immer kleinere Pixel zur Verschlüsselung verwendet werden können.

Die US 2008/0002882 A1 beschreibt ein Sicherheitsverfahren, bei dem auf dem Produkt versteckt ein Code hinterlegt ist. Über ein Smartphone wird das Produkt abgescannt und es erfolgt ein Datenaustausch zu einem Zentralrechner, in dem es zu einem Abgleich der Daten kommt. Der Zentralrechner sendet dann dem Smartphone zurück, ob es sich um ein Original oder eine Fälschung handelt. Alternativ können die Daten auch auf dem Smartphone hinterlegt sein, so dass kein Datenaustausch mit einem Zentralcomputer erforderlich ist.

Aus der US 2013/0311329 A1 ist ein Verfahren bekannt, welches zur gezielten Werbung verwendet wird. Um einem sozial bekannten Netzwerker eine breitere Güterbasis zu geben, für die erwirbt, kann er einen Gegenstand, der ihm gefällt, abfotografieren, woraufhin über einen Cloudrechner ähnliche Produkte ermittelt werden, die dem Nutzer gefallen könnten. Der Nutzer sucht sich dann gegebenenfalls eines oder mehrerer dieser Produkte auf dem Smartphone aus, die dann automatisch mit seinem Account im einem sozialen Netzwerk verknüpft werden.

Schließlich beschreibt die US 2007/286472 A1 ein Verfahren, bei dem Wasserzeichen in einer Papierbahn überprüft werden. Diese Wasserzeichen können u.U. wegen einer defekten Walze, die die Wasserzeichen einprägt, nicht mehr vorhanden sein oder fehlerhaft sein. Die Position, in der Wasserzeichen auf der Papierbahn zu erwarten sind, wird über Linien auf der Bahn bestimmt. Mit Kameras wird herausgefunden, ob ein Wasserzeichen vorhanden ist und ob es korrekt ist.

Aufgabe der Erfindung ist es, ein Verfahren zu schaffen, mit dem Dekorpapier oder Dekorfolie hergestellt wird, die die Oberfläche eines Dekorteils bilden, und mit dem das Dekorpapier oder der Dekorfolie gegen unzulässige Vervielfältigung geschützt wird.

Das erfindungsgemäße Verfahren ist durch folgende Schritte gekennzeichnet:
a) Erstellen von digitalen Bildinformationen, die ein gewünschtes Dekor definieren,
b) Einbetten eines Zeichens in die Bildinformationen des gewünschten Dekors unter Schaffung veränderter Bildinformationen, wobei beim Ausdruck der geänderten Bildinformationen die Änderungen vom menschlichen Auge nicht wahrnehmbar sind und damit das eingebettete Zeichen vom menschlichen Auge nicht wahrnehmbar ist,
c) Bedrucken des Dekorpapiers oder der Dekorfolie zur Bildung des gewünschten Dekors inklusive des eingebetteten Zeichens mittels der geänderten Bildinformationen,
d) Vorsehen einer Software-App, die auf einem mit einer Kamera gekoppelten Computer abgespeichert ist,
e) Vorsehen eines Monitors, der mit dem Computer gekoppelt ist,
f) wobei die Software-App so ausgebildet ist, dass sie aus dem über die Kamera aufgenommenen Bild das eingebettete Zeichen herausfiltert und über den Monitor wiedergibt.

Das erfindungsgemäße Verfahren weicht grundlegend von den zuvor genannten bekannten Verfahren ab. Die in der ursprünglichen Bildinformation für das gewünschte Dekor eingebetteten Daten, die die Bildinformation verändern, sind für das menschliche Auge nicht sichtbar, wohl aber mit einer Software-App. Anders als im Stand der Technik kann die eingebettete Bildinformation aber mitkopiert werden, und zwar unter Verwendung von handelsüblichen Scannern und Druckern, insbesondere mit Scannern, die eine Auflösung von 300, 600 oder 1.200 dpi haben und Druckern mit einer Druckauflösung von nur 600 dpi, vorzugsweise 1.200 dpi, beziehungsweise mit gerasterten Daten gravierte Druckzylindern für das Tiefdruckverfahren. Das Drucken des Dekors mittels der geänderten Bildinformationen liefert somit ein Dekor, welches dem Original-Dekor sehr nahekommt. Dadurch, dass aber das Zeichen vom Produktpirat, ohne dass diese es weiß, mit gedruckt wird, kann der Originalhersteller schnell und eindeutig identifizieren, dass sein Dekor kopiert wurde und nicht ein ähnliches Dekor.

Insbesondere ist das Zeichen eine eingetragene, geschützte Marke und/oder ein eingetragenes, geschütztes Design, wobei der unberechtigte Produktpirat, ohne es zu merken, die geschützte Marke und/oder das geschützte Design mitdruckt, die bzw. das dann mittels der verbreiteten Software-App sofort sichtbar wird. Eine weitere Besonderheit ergibt sich dadurch, dass die App nicht etwa aufgrund einiger eingebetteter Zeichen das Dekor erkennt und dann eine abgespeicherte Marke/Design oder, wie im Stand der Technik, den Hinweis "Original" wiedergibt, sondern dass das Zeichen (in der bevorzugten Ausführungsform die Marke oder das eingetragene Design) selbst im Dekor enthalten ist und nur über das Hilfsmittel der Software-App angezeigt wird.

Es gibt verschiedene Möglichkeiten, die allerdings im Stand der Technik bestens bekannt sind, um das Zeichen in die Bildinformation des gewünschten Dekors einzubetten und die bei der vorliegenden Erfindung genutzt werden können. Zum einen ist es möglich, das Zeichen dem Original-Dekor sozusagen zu überlagern, ähnlich wie ein sogenanntes Griesbild, auch Rauschbild genannt, welches im Zusammenhang mit Figur 13 der DE 696 20 751 T2 beschrieben wird. Die diesbezügliche, in dieser Schrift beschriebene Technik wird ausdrücklich als Möglichkeit zur Einbettung des Zeichens und zur Ausfilterung des Zeichens nach dem Drucken als Option zur Durchführung einiger Schritte des erfindungsgemäßen Verfahrens in die vorliegende Anmeldung einbezogen.

Weitere ähnliche Verfahren für denselben Zweck, die auch beim erfindungsgemäßen Verfahren angewendet werden können, sind in der EP 1 019 868 B1 und der EP 1 923 830 A2 beschrieben.

Ein vereinfachtes Verfahren zum Einbetten und Ausfiltern des Zeichens lässt sich grob in etwa wie folgt erläutern: Die Bildinformationen für das gewünschte Original-Dekor sind in Pixel aufgeteilt, die ein gewisses Signal bilden, welches dann durch den Scanner erfasst wird. Beispielsweise können in ersten Flächenabschnitten mit mehreren Pixeln minimale Farbwertverschiebungen des Dekors in diesem Bereich erfolgen, mit denen das Signal ebenfalls verschoben wird. Die Farbwertverschiebungen sind so untergeordnet, dass sie durch das menschliche Auge nicht wahrgenommen werden können, wohl aber durch eine entsprechende Software. So ergeben sich beispielsweise größere Pixel, bestehend aus zahlreichen Einzelpixeln, die ein Feld mit einer Farbwertverschiebung darstellen. Ein Nachbarfeld (zweite Flächenabschnitte) kann beispielsweise keine oder eine Farbwertverschiebung in die Gegenrichtung haben, sodass sich dadurch insgesamt eine Art schwarzes und eine Art weißes Feld ( an den ersten bzw. zweiten Flächenabschnitten) in Form von übergroßen Pixeln ergibt. Die Ermittlung dieser Farbwertverschiebung(en) kann beispielsweise so erfolgen, wie dies in den zuvor genannten Druckschriften erwähnt ist. Beispielsweise kann das Dekor mit unveränderten Farbwerten abgespeichert sein. Dieses Dekor stellt ein Feld von Einzelsignalen dar, die dann von den ermittelten Bildinformationen, genauer gesagt von deren Signalen abgezogen wird, sodass als Wert dann beispielsweise ein Feld mit schwarzen und weißen Pixeln übrig bleibt, welche das nicht sichtbare Zeichen in Form der geschützten Marke und/oder des geschützten Designs darstellt. Wenn der unrechtmäßige Druck des Raubkopierers aufgrund des anderen Druckers oder aufgrund eines mäßigen Scans bereits eine Farbverschiebung insgesamt zur Folge haben sollte, so wird diese Farbverschiebung zuerst einmal von der Software-App erkannt und, wenn die App die richtigen Farbwerte kennt, in Richtung der richtigen Farbwerte verschoben, sodass dann wieder als Ausgangspunkt für die nachfolgende Analyse die richtigen Farbwerte zur Verfügung stehen, um davon ausgehend die hinterlegten Daten und Signale abzuziehen und damit das vorab nicht sichtbare Zeichen sichtbar zu machen. Ebenfalls ist es möglich, die Farbverschiebung nur als abgestufte Grauwerte zu betrachten und auch hier die in den Ursprungsdaten vorhandene Farbverschiebung als Muster zu erkennen.

Das sichtbare Zeichen besteht vorzugsweise aus Pixeln, die jeweils wenigstens 2 x 2 mm groß sind. Das bedeutet, diese Pixel werden aus vielen Einzelpixeln zusammengesetzt. Dies erleichtert nicht nur das Einbetten des Zeichens, sondern auch die Detektion desselben.

Das Dekorpapier oder die Dekorfolie ist vorzugsweise ein Beschichtungsmaterial für Möbeloberflächen, Möbelfolien, Wände, Fußböden oder Raumdecken.

Das bedruckte Dekorpapier oder die bedruckte Dekorfolie werden auf ein Trägerteil flächig aufgebracht, wobei dieses Trägerteil beispielsweise eine Platte ist.

Optional ist das Trägerteil aus Holz, Faserwerkstoff oder Kunststoff.

Das Bedrucken des Dekorpapiers oder der Dekorfolie erfolgt im sogenannten Endlosdruck, insbesondere im Tief- oder Digitaldruckverfahren. Mit diesen Verfahren lassen sich die hohen erforderlichen Qualitäten sicherstellen.

Vorzugsweise ist das Dekor eine Holznachbildung, eine Steinreplikation oder ein Textilmuster, wobei das eingebettete Zeichen davon abweichend ausgebildet ist. Dies bedeutet, dass eingebettete Zeichen ist keine Holznachbildung, wenn das Dekor eine Holznachbildung ist, keine Steinreplikation, wenn das Dekor eine Steinreplikation ist, und kein Textilmuster, wenn das Dekor ein Textilmuster ist.

Wie bereits zuvor erwähnt, ist das Zeichen vorzugsweise aus Pixeln zusammengesetzt und bildet ein Muster. Alternativ kann natürlich auch ein Wort oder eine Wort-/Bildmarke oder ein eingetragenes und geschütztes Design als Zeichen verwendet werden.

Vorzugsweise hat das Zeichen eine Größe von wenigstens 20 x 20 mm und/oder besteht aus wenigstens 8 x 8 übergroßen Pixeln, die insbesondere jeweils, wie erwähnt, 2 x 2 mm groß sind.

In das Dekor lassen sich auch zusätzliche, für das spezielle Dekor individuelle und für das menschliche Auge nicht sichtbare Dekorerkennungsmuster einbetten und gedruckt werden. Diese separaten Dekorerkennungsmuster dienen als eindeutiges, für das jeweilige Dekor spezielles Signal, welches die App erfassen kann. Das bedeutet, der Bediener kann beispielsweise nach Abfotografieren des Dekors durch sein Handy auf der App nicht nur das zuvor erwähnte Zeichen erkennen, sondern kann in der App anwählen, spezielle Informationen über das Dekor zu erlangen, beispielsweise die Bezeichnung des Dekors, den Hersteller, Eigenschaften des Dekors, oder auch Preise. Gegebenenfalls kann damit auch eine Information darüber erhalten werden, ob das gerade abfotografierte Dekor vermutlich oder sogar sicher ein Plagiat ist. Dafür kann optional zusätzlich auch eine Anordnung von einzelnen extrem kleinen Pixeln einen Code darstellen, der bei herkömmlichen Scannern und Druckern nicht vervielfältigt werden kann. Ebenfalls kann das durch das Abscannen erzeugte Rauschen benutzt werden einen Vergleich mit dem Originaldaten herbeizuführen und eine Kopie zu identifizieren

Wie bereits zuvor erwähnt, können in der App oder über eine Internetankopplung auf einem Server Daten zum speziellen Dekor abgelegt sein, die über die App abgefragt werden können, sobald das spezielle Dekorerkennungsmuster auch identifiziert ist.

Am Rand, z. B. an den Ecken des Zeichens lassen sich nicht sichtbare Codes in das Dekor einbetten, die für die Art des Dekors selbst eindeutig sind. Über eine App und eine externe Datenbank können Benutzer dann den Dekortyp erfragen.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 ein durch das erfindungsgemäße Verfahren herstellbares Dekor mit eingeblendetem, sichtbar gemachtem Zeichen,
- Figur 2 das Zeichen nach Figur 1, ohne das Dekor,
- Figur 3 einzelne Verfahrensschritte beim erfindungsgemäßen Verfahren, und
- Figur 4 einen Verfahrensschritt zum Erzeugen eines mit dem erfindungsgemäßen Dekorpapier oder der Dekorfolie versehenen Dekorteils.

Nachfolgend wird ein Verfahren zum Herstellen und Schützen gegen unzulässige Vervielfältigung von bedrucktem Dekorpapier oder bedruckter Dekorfolie 10 erläutert, mittels dem ein Dekorteil erzeugt wird.

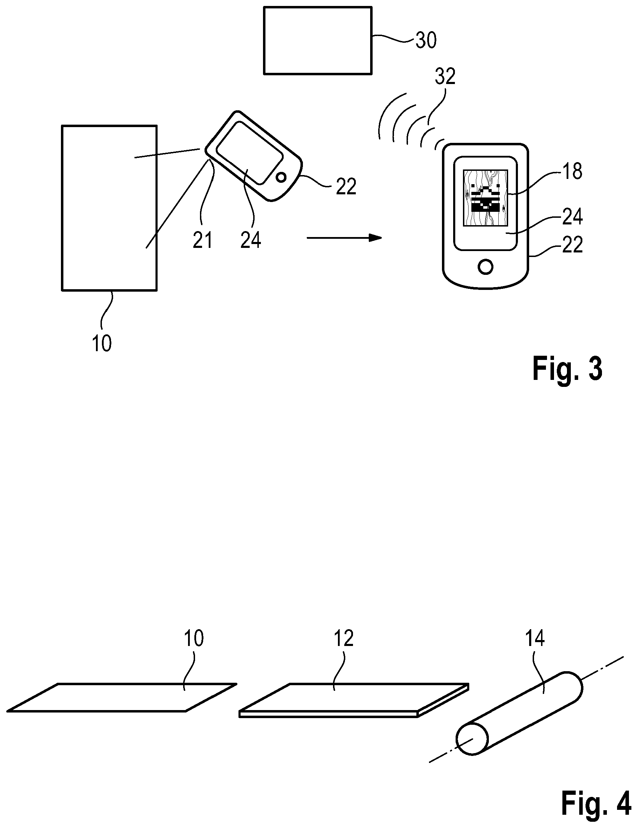

Ein solches Dekorteil kann als Möbeloberfläche, als Wand, Fußboden oder Raumdecke ausgeführt sein. Derartige Dekorteile bestehen üblicherweise aus einem Trägerteil, insbesondere eine Platte 12, sowie dem zuvor erwähnten Dekorpapier oder Dekorfolie 10, die miteinander vollflächig verbunden werden, wie dies in Figur 4 mittels der Walze 14 stilisiert dargestellt ist.

Ein solches Dekorpapier umfasst ein sogenanntes Rohpapier in Form von einem hochtechnischen Spezialpapier, welches mit wässrigen oder lösungsmittelhaltigen Farbsystemen bedruckt wird. Nach dem Bedrucken wird das Dekorpapier imprägniert, bei Vorimprägnat eventuell lackiert und mit dem Trägerteil 12 verpresst. Alternativ kann das Trägerteil mit dem bedruckten, lackierten Vorimprägnatpapier kaschiert werden.

Alternativ zu einem Papier werden zum selben Zweck und über dieselben Herstellungsschritte oder ähnliche Herstellungsschritte auch bedruckte Dekorfolien eingesetzt. Solche Folien sind üblicherweise aus thermoplastischen Kunststoffen, zum Beispiel PVC, PP, PET und dergleichen.

Die Trägerteile sind üblicherweise aus Holz, Faserwerkstoff oder Kunststoff. Natürlich können auch andere Werkstoffe verwendet werden, auf die zum Beispiel das Dekorpapier oder die Dekorfolie auflaminiert wird, zum Beispiel mineralische Materialien, Metalle oder Mischformen aus allen obigen Materialien.

Auf das Dekorpapier oder die Dekorfolie wird ein Dekor im Tiefdruck oder Digitaldruck aufgebracht, welches zum Beispiel eine Holznachbildung, eine Steinreplikation, fotorealistische Abbildungen, aber auch grafische Elemente oder Textil- und Fantasiemuster ist.

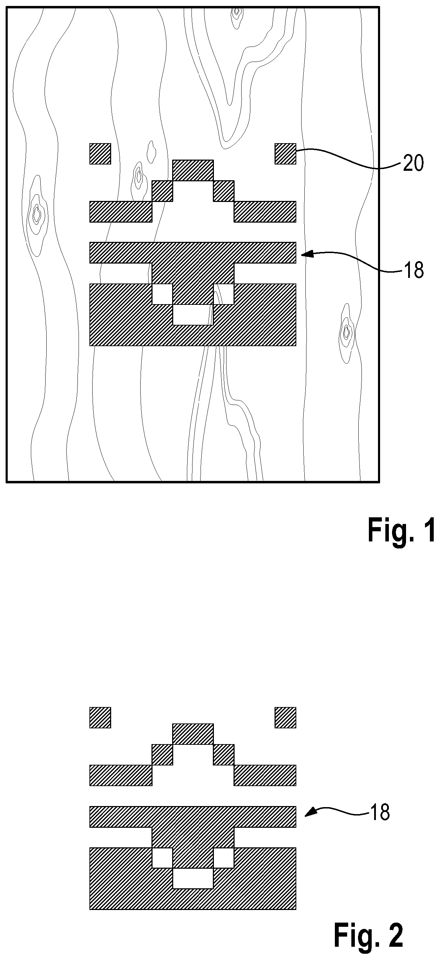

In Figur 1 ist ein Dekor, hier eine Holznachbildung, dargestellt, welche am Computer erzeugt wurde. Dies kann beispielsweise dadurch geschehen, dass einzelne Abschnitte eines Holzes fotografiert und anschließend digital weiterverarbeitet werden, um ein perfektes Holzdekor wiederzugeben, das einerseits naturgemäß, das heißt echt aussieht, auf der anderen Seite von der Dekorstruktur nicht offensichtlich so perfekt ist, dass es auf den ersten Blick als zu perfekt und künstlich angesehen wird. Entsprechend wird am Computer für dieses gewünschte Dekor eine digitale Bildinformation erstellt, mittels der das Dekor im Tiefdruck oder Digitaldruck hergestellt werden kann.

In dieses Dekor wird am Computer ein Zeichen 18 eingebettet, welches in Figur 2 noch einmal separat dargestellt ist und welches eine geschützte, eingetragene Marke und/oder ein eingetragenes, geschütztes Design darstellt.

Das Einbetten des Zeichens 18 erfolgt so, dass die Bildinformationen, die zuvor für das gewünschte Dekor erzeugt wurden, minimal so verändert werden, dass das menschliche Auge diese Veränderung beim späteren Ausdruck der geänderten Bildinformationen nicht sieht.

Figur 1 zeigt also eine Darstellung, die es real nicht gibt, da das Zeichen 18 hier zusätzlich zur Holznachbildung sichtbar ist. Verdeutlicht werden soll hier jedoch, dass das Zeichen 18 relativ groß ist, wenigstens 20 x 20 mm in seinen Abmessungen und im vorliegenden Fall aus einzelnen übergroßen Pixeln besteht, nämlich aus Feldern von wenigstens 8 x 8 Pixeln, im vorliegenden Fall 10 x 10 Pixeln. Einige der Felder sind schwarz dargestellt, die anderen sind transparent. Jedes Pixel, ein Pixel 20 ist zur Identifikation mit einem Bezugszeichen versehen, besteht natürlich für den Druck und für die Bildinformation aus vielen Einzelpixeln, abhängig von der jeweiligen Software, eventuell dem Scanner oder der Druckeinrichtung.

Durch das Einbetten des Zeichens werden die ursprünglich Original-Bildinformationen für das gewünschte Dekor verändert. Diese geänderten Bildinformationen würden beim Ausdruck zu einem Dekor führen, welches sich für das menschliche Auge nicht von dem ursprünglichen Originaldekor unterscheidet.

Wie die Einbettung des Zeichens erfolgt, wurde in der vorliegenden Beschreibungseinleitung auch unter Verweis auf drei Patentanmeldungen/Patente erläutert. Für das beschriebene Beispiel gelten diese Verfahren ebenfalls.

Die Veränderung der Bildinformationen und damit auch die Veränderung des ausgedruckten Dekors ist so ausgeführt, dass sie mittels eines Scanners (darunter zählen auch Fotoapparate, insbesondere von Smartphones oder Tablets) erfasst und entsprechend bei einem Ausdruck des gescannten Bildes wiedergegeben werden würde.

Im Normalfall wird nämlich nach dem Bedrucken des Dekorpapiers oder der Dekorfolie zur Bildung des gewünschten Dekors mittels der geänderten Bildinformationen dieses Original von Raubkopierern mittels Fotoapparaten oder Hochleistungsscannern aufgenommen und entsprechende Kopien gedruckt.

Auf einem Computer 22, worunter nicht nur herkömmliche Computer, sondern auch Smartphones, Tablets und dergleichen fallen, ist eine Software-App abgespeichert, wobei hierunter auch zu verstehen ist, dass die App auf einen Server zugreift und dort die Software oder ein Teil der Software der App läuft.

Mit dem Computer 22 ist eine Kamera 21 gekoppelt (bei Smartphones oder Tablets ist dies die integrierte Kamera), mittels der das in Figur 1 gezeigte Dekor aufgenommen werden kann.

Mit dem Computer 22 ist auch ein Monitor 24 gekoppelt, der im Falle eines Smartphones oder eines Tablets der darin integrierte Monitor ist.

Die Software-App ist so ausgebildet, dass sie aus den über die Kamera 21, wie in Figur 3 angedeutet, aufgenommenen Bild des Dekors 10 das eingebettete Zeichen 18 und damit die geschützte Marke und/oder das eingetragene, geschützte Design ausfiltert und über den Monitor 24 wiedergibt, wie dies in Figur 3 angedeutet ist.

Die einzelnen schwarzen Pixel 20 sind beispielsweise Flächen, in denen eine leichte Farbverschiebung vorgenommen wurde, und die weißen Flächen in dem quadratischen Feld aus 10 x 10 Pixeln sind Flächen, in denen keine Farbverschiebung, oder auch eine andere unterscheidbare Farbverschiebung vorgenommen wurde,.

Im Computer oder in einem über eine Internetankoppelung verbundenen Server 30 ist beispielsweise das Zeichen 18 hinterlegt und daher abfragbar. Beispielsweise, dies ist nicht einschränkend zu verstehen, kann das aufgenommene Foto im Hintergrund untersucht werden, um eine schnelle Übereinstimmung einiger Pixel mit dem hinterlegten Muster zu finden und danach die angrenzenden Flächen im Detail auf Übereinstimmung mit dem Zeichen zu überprüfen, damit die Bearbeitung schneller erfolgt.

Durch die durch das Foto (ein Scan soll auch unter den Begriff "Foto" fallen) erhaltenen Bildinformationen werden Signalwerte erzeugt, von denen die vorgegebenen Signalwerte des Holzdekors, die ebenfalls entweder auf dem Computer oder dem Server 30 hinterlegt sind, abgezogen werden, sodass die Flächen mit einer Farbverschiebung dargestellt werden, hier die schwarzen Flächen. Es wird also kein abgespeichertes Zeichen wiedergegeben, welches voraussichtlich das versteckt im Bild hinterlegte Zeichen wiedergibt, sondern es wird tatsächlich ausschließlich das Zeichen auf dem fotografierten Dekor wiedergegeben. Da die unrechtmäßige Vervielfältigung dieses Zeichen eine Marken- und/oder Designverletzung darstellt, ist der Raubkopierer ein Marken- und/oder Designverletzer.

Die Zeichen 18 sind mehrfach auf einem Dekor aufgebracht, vorzugsweise voneinander beabstandet. Das bedeutet, nicht das gesamte Dekor ist komplett mit diesem Zeichen "zugepflastert", vielmehr sind zahlreiche Zeichen 18 verstreut entweder gleichmäßig oder ungleichmäßig in das Dekor eingearbeitet.

Die Größe des Zeichens 18 ist mit wenigstens 20 x 20 mm so groß, dass es von einem Smartphone ausreichend genau aufgenommen werden kann, wenn das gesamte Dekor fotografiert wird.

Solche Dekore werden im Endlosdruck bedruckt, das heißt, das Papier oder die Folie wird von einer Rolle abgezogen, sodass breite und endlos lange Bahnen entstehen.

Das Dekormuster selbst wiederholt sich nach zumindest einigen Metern wieder.

Zusätzlich können auch Informationen durch Steganografie in das Dekor eingebettet werden, über die dann der Computer 22 oder der Server 30 das Dekor selbst erkennt und Informationen auf dem Monitor 24 wiedergeben kann, die zum Beispiel Auskunft über das spezielle Dekor, den Hersteller, die Bestellnummer, die Eigenschaften usw. enthalten.

Diese Informationen können entweder im Computer 22 oder auf dem Server 30 abgelegt werden. Bei Verwendung eines Servers 30 ist natürlich eine Internetankoppelung 32 zwischen dem Server 30 und dem Computer 22 notwendig.

Über die Steganografie werden entsprechende Dekorerkennungsmuster, die aus einzelnen, sehr kleinen Pixeln, die in Figur 1 nicht zu sehen wären, verwendet. Diese Dekorerkennungsmuster können, müssen jedoch nicht beim Druck und vorhergehenden Scan durch einen Raubkopierer auf der Fälschung wiedergegeben werden. Gegebenenfalls kann die verwendete Steganografietechnik ein Scannen oder ein Drucken mittels herkömmlicher Vorrichtungen unmöglich machen.

## Patentansprüche

1. Verfahren einerseits zum Herstellen von Dekorpapier oder Dekorfolie zur Schaffung einer Oberfläche eines Dekorteils und andererseits zum Schützen gegen unzulässige Vervielfältigung, mit den folgenden Schritten:
a) Erstellen von digitalen Bildinformationen, die ein gewünschtes Dekor (10) definieren,
b) Einbetten eines Zeichens (18) in die Bildinformationen des gewünschten Dekors unter Schaffung veränderter Bildinformationen, wobei beim Ausdruck der geänderten Bildinformationen die Änderungen vom menschlichen Auge nicht wahrnehmbar sind und damit das eingebettete Zeichen vom menschlichen Auge nicht wahrnehmbar ist,
c) Bedrucken des Dekorpapiers oder der Dekorfolie zur Bildung des gewünschten Dekors inklusive des eingebetteten Zeichens mittels der geänderten Bildinformationen,
d) Vorsehen einer Software-App, die auf einem mit einer Kamera (21) gekoppelten Computer (22) abgespeichert ist,
e) Vorsehen eines Monitors (24), der mit dem Computer (22) gekoppelt ist,
f) wobei die Software-App so ausgebildet ist, dass sie aus dem über die Kamera aufgenommenen Bild das eingebettete Zeichen (18) herausfiltert und über den Monitor (24) wiedergibt.

2. Verfahren nach Anspruch 1, **dadurch gekennzeichnet, dass** das Dekorpapier oder die Dekorfolie ein Beschichtungsmaterial für Möbeloberflächen, Wände, Fußböden oder Raumdecken ist.

3. Verfahren nach Anspruch 1 oder 2, **dadurch gekennzeichnet, dass** das bedruckte Dekorpapier oder die bedruckte Dekorfolie zur flächigen Anbringung auf ein Trägerteil (12) ausgebildet ist.

4. Verfahren nach einem der vorhergehenden Ansprüche, **dadurch gekennzeichnet, dass** das Bedrucken im Endlosdruck erfolgt, insbesondere im Tief- oder Digitaldruck.

5. Verfahren nach einem der vorhergehenden Ansprüche, **dadurch gekennzeichnet, dass** das Zeichen (18) ein aus übergroßen Pixeln (20) mit jeweils einer Pixelgröße von wenigstens 2 x 2 mm zusammengesetztes Muster ist.

6. Verfahren nach einem der vorhergehenden Ansprüche, **dadurch gekennzeichnet, dass** das eingebettete Zeichen (18) eine eingetragene, geschützte Marke und/oder ein eingetragenes, geschütztes Design ist.

7. Verfahren nach einem der vorhergehenden Ansprüche, **dadurch gekennzeichnet, dass** das Dekor eine Holznachbildung, eine Steinreplikation oder ein Textilmuster ist und dass das eingebettete Zeichen davon abweichend ausgebildet ist.

8. Verfahren nach einem der vorhergehenden Ansprüche, **dadurch gekennzeichnet, dass** das Zeichen (18) eine Größe von wenigstens 20 x 20 mm hat.

9. Verfahren nach einem der vorhergehenden Ansprüche, **dadurch gekennzeichnet, dass** das Zeichen (18) aus wenigstens 8 x 8 Pixeln besteht.

10. Verfahren nach Anspruch 9, **dadurch gekennzeichnet, dass** jedes Pixel eine Größe von wenigstens 2 x 2 mm hat.

11. Verfahren nach einem der vorhergehenden Ansprüche, **dadurch gekennzeichnet, dass** in das Dekor ein für das spezielle Dekor individuelles und für das menschliche Auge nicht sichtbares Dekorerkennungsmuster eingebettet und gedruckt wird.

12. Verfahren nach Anspruch 11, **dadurch gekennzeichnet, dass** in der Software-App oder über eine Internetankoppelung auf einem Server (30) Daten zum speziellen Dekor abgelegt sind, die über die Software-App abgefragt werden können, sobald das spezielle Dekorerkennungsmuster erkannt ist.

13. Verfahren nach einem der vorhergehenden Ansprüche, **dadurch gekennzeichnet, dass** Zeichen dem Original-Dekor optisch überlagert wird.

## Claims

1. A method of, on the one hand, manufacturing decorative paper or decorative film for creating a surface of a decorative part and, on the other hand, of protecting against inadmissible duplication, comprising the following steps:
(a) preparing digital image information defining a desired decorative design (10);
(b) embedding a mark (18) into the image information of the desired decorative design while creating modified image information, wherein when the modified image information is printed out, the modifications are not perceptible to the human eye and thus the embedded mark is not perceptible to the human eye;
(c) printing on the decorative paper or the decorative film to form the desired decorative design inclusive of the embedded mark by means of the modified image information;
(d) providing a software app which is stored on a computer (22) coupled to a camera (21);
(e) providing a monitor (24) which is coupled to the computer (22);
(f) wherein the software app is configured to filter out the embedded mark (18) from the image taken by means of the camera and to reproduce it by means of the monitor (24).

2. The method according to claim 1, **characterized in that** the decorative paper or the decorative film is a coating material for furniture surfaces, walls, floors or room ceilings.

3. The method according to claim 1 or 2, **characterized in that** the printed decorative paper or the printed decorative film is adapted for planar application to a carrier part (12).

4. The method according to any of the preceding claims, **characterized in that** the printing is effected in a continuous printing process, in particular in gravure or digital printing.

5. The method according to any of the preceding claims, **characterized in that** the mark (18) is a pattern composed of oversized pixels (20), each having a pixel size of at least 2 x 2 mm.

6. The method according to any of the preceding claims, **characterized in that** the embedded mark (18) is a registered protected trademark and/or a registered protected design.

7. The method according to any of the preceding claims, **characterized in that** the decorative design is an imitation wood, a stone replica or a textile pattern and **in that** the embedded mark is formed to differ therefrom.

8. The method according to any of the preceding claims, **characterized in that** the mark (18) has a size of at least 20 x 20 mm.

9. The method according to any of the preceding claims, **characterized in that** the mark (18) consists of at least 8 x 8 pixels.

10. The method according to claim 9, **characterized in that** each pixel has a size of at least 2 x 2 mm.

11. The method according to any of the preceding claims, **characterized in that** a decorative design recognition pattern which is specific to the particular decorative design and is not visible to the human eye is embedded and printed into the decorative design.

12. The method according to claim 11, **characterized in that** data on the particular decorative design is stored in the software app or on a server (30) via an Internet connection, which data can be retrieved using the software app as soon as the particular decorative design recognition pattern is recognized.

13. The method according to any of the preceding claims, **characterized in that** the mark is optically superimposed on the original decorative design.

## Revendications

1. Procédé, d'une part, pour la fabrication de papier décoratif ou de feuille décorative pour la création d'une surface d'une pièce décorative et, d'autre part, pour la protection contre une reproduction non autorisée, comprenant les étapes suivantes :
a) établir des informations d'image numériques définissant un décor souhaité (10),
b) intégrer un signe (18) dans les informations d'image du décor souhaité en créant des informations d'image modifiées, les modifications n'étant pas perceptibles à l'oeil humain lors de l'impression des informations d'image modifiées, et le signe intégré n'étant donc pas perceptible à l'oeil humain,
c) imprimer le papier décoratif ou la feuille décorative pour créer le décor souhaité, y compris le signe intégré, au moyen des informations d'image modifiées,
d) prévoir une application logicielle enregistrée sur un ordinateur (22) couplé à une caméra (21),
e) prévoir un moniteur (24) couplé à l'ordinateur (22),
f) l'application logicielle étant réalisée de manière à filtrer le signe intégré (18) de l'image enregistrée par la caméra et à le reproduire au moyen du moniteur (24).

2. Procédé selon la revendication 1, **caractérisé en ce que** le papier décoratif ou la feuille décorative est un matériau de revêtement pour des surfaces de meubles, des murs, des planchers ou des plafonds.

3. Procédé selon la revendication 1 ou 2, **caractérisé en ce que** le papier décoratif imprimé ou la feuille décorative imprimée est réalisé(e) pour l'application de manière plane sur une pièce de support (12).

4. Procédé selon l'une des revendications précédentes, **caractérisé en ce que** l'impression est réalisée par impression continue, en particulier par impression en taille douce ou numérique.

5. Procédé selon l'une des revendications précédentes, **caractérisé en ce que** le signe (18) est un motif composé de pixels surdimensionnés (20) présentant chacun une taille de pixel d'au moins 2 x 2 mm.

6. Procédé selon l'une des revendications précédentes, **caractérisé en ce que** le signe intégré (18) est une marque déposée et protégée et/ou un dessin ou modèle déposé et protégé.

7. Procédé selon l'une des revendications précédentes, **caractérisé en ce que** le décor est une imitation bois, une réplique de pierre ou un motif textile et **en ce que** le signe intégré est réalisé différemment.

8. Procédé selon l'une des revendications précédentes, **caractérisé en ce que** le signe (18) a une taille d'au moins 20 x 20 mm.

9. Procédé selon l'une des revendications précédentes, **caractérisé en ce que** le signe (18) est composé d'au moins 8 x 8 pixels.

10. Procédé selon la revendication 9, **caractérisé en ce que** chaque pixel a une taille d'au moins 2 x 2 mm.

11. Procédé selon l'une des revendications précédentes, **caractérisé en ce qu'**un motif de reconnaissance de décor individuel pour le décor spécifique et invisible à l'oeil humain est intégré et imprimé dans le décor.

12. Procédé selon la revendication 11, **caractérisé en ce que** des données relatives au décor spécifique sont stockées dans l'application logicielle ou sur un serveur (30) par une connexion Internet, lesquelles peuvent être consultées via l'application logicielle dès que le motif de reconnaissance de décor spécifique est reconnu.

13. Procédé selon l'une des revendications précédentes, **caractérisé en ce que** des signes sont superposés optiquement au décor d'origine.
